# EUROPÄISCHE PATENTSCHRIFT

(11) **EP 2 542 034 B1**
(45) Veröffentlichungstag und Bekanntmachung des Hinweises auf die Patenterteilung: **26.07.2017**
(21) Anmeldenummer: 12004100.9
(22) Anmeldetag: 26.05.2012
(51) Int. Cl.: H05B 39/04

(54) **Dimmer-Schaltung für das Phasenanschnitt-Verfahren**
Dimmer switch for phase angle method
Circuit d'atténuation pour le procédé d'entrée des phases

(30) Priorität: 24.06.2011 DE 102011105444
(43) Veröffentlichungstag der Anmeldung: 02.01.2013
(73) Patentinhaber: ABB AG, 68309 Mannheim (DE)
(72) Erfinder: Goldyn, Dirk, 58454 Witten (DE); Czimmeck, Frank, 58511 Lüdenscheid (DE); Clever, Gerhard, 58553 Halver (DE); Linde, Holger, 44137 Dortmund (DE)

(56) Entgegenhaltungen:
- US-A- 4 633 161
- US-A- 5 004 969
- US-A- 5 336 979
- US-A- 5 808 417
- US-A1- 2003 127 994
- US-A1- 2005 104 543

## Beschreibung

Die Erfindung betrifft eine Dimmer-Schaltung für das Phasenanschnitt-Verfahren. Dimmer-Schaltungen für das Phasenanschnitt-Verfahren schalten eine Netzwechselspannung abhängig von einer gewünschten Ausgangsspannung bei einem bestimmten Phasenwinkel ϕ durch und im Nulldurchgang wieder ab. Dadurch lässt sich jede gewünschte Ausgangsspannung einstellen.

Aus der DE 197 34 107 A1 ist ein Dimmer zur Steuerung einer Last, insbesondere zur Helligkeitssteuerung von Beleuchtungseinrichtungen bekannt, wobei die Last unter Zwischenschaltung eines Leistungsteils des Dimmers an ein Niederspannungsnetz anschließbar ist. Zur Ansteuerung des Leistungsteils ist eine Regeleinrichtung (Mikrocontroller) vorhanden, mit der eine Regelung des Effektivwertes der Ausgangsspannung des Dimmers erfolgt. Es wird ausgeführt, dass sowohl zur Steuerung nach dem Phasenanschnitt- wie auch nach dem Phasenabschnitt-Verfahren der jeweilige Nulldurchgang der Netzwechselspannung detektiert und zur Steuerung herangezogen wird.

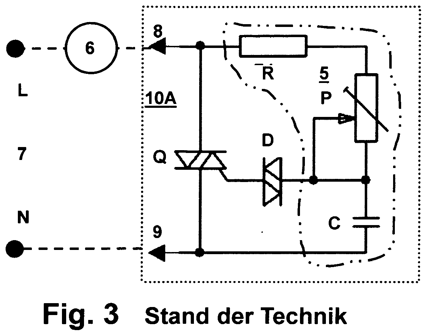

In Fig. 3 ist eine typische Dimmer-Schaltung für das Phasenanschnitt-Verfahren dargestellt. Die Dimmerschaltung 10A besteht aus einem Triac Q als Leistungsteil, einer mit dem Steuereingang des Triacs verbundenen Triggerdiode D und einer R/C-Kombination 5 mit Widerstand R, Potentiometer P und Kondensator C, wobei diese Baukomponenten in Serie angeordnet sind. Der Triac Q liegt über seine erste Hauptelektrode und einen ersten Anschluss 8 der Dimmer-Schaltung 10A in Serie mit einer Last 6, insbesondere einem dimmbaren Leuchtmittel sowie über seine zweite Hauptelektrode und einen zweiten Anschluss der Dimmer-Schaltung 10A am Phasenleiter L eines Wechselspannungsnetzes 7 (vorzugsweise 230V-Netz). Die R/C-Kombination 5 ist einerseits über den Widerstand R an den Verbindungspunkt von Triac Q / Anschluss 8 mit Last (Leuchtmittel) 6 und andererseits über den Kondensator C an den Verbindungspunkt von Triac Q / Anschluss 9 mit Nulleiter N angeschlossen. Der Widerstand R ist andererseits über das Potentiometer P mit dem Kondensator C verbunden. Die Triggerdiode D ist an den Potentiometerschleifer sowie an den Verbindungspunkt von Potentiometer P / Kondensator C angeschlossen.

Ein Vorteil dieser allgemein bekannten Dimmer-Schaltung ist die hohe Unempfindlichkeit gegen Rundsteuersignale, die in elektrischen Energieversorgungsnetzen auf die Netzwechselspannung aufmoduliert werden, um z.B. Straßenbeleuchtung oder Mehrtarifzähler (Tarifumschaltung) zu steuern. Der die Helligkeit des Leuchtmittels 6 bestimmende Phasenwinkel ϕ wird mittels der R/C-Kombination 5 mit R1 / P / C durch Betätigung des Potentiometers P eingestellt. Sobald die Spannung am Kondensator C die Triggerspannung der Triggerdiode D erreicht hat, wird der Triac Q bei jeder Halbwelle der Netzwechselspannung gezündet und der Kondensator C über die Triggerdiode D und den Triac Q entladen. Diese gegen Rundsteuersignale relativ unempfindliche Dimmer-Schaltung lässt sich nicht in einfacher Weise auf eine Dimmer-Schaltung mit Mikrocontroller-Ansteuerung übertragen.

Der Erfindung liegt die Aufgabe zugrunde, eine Dimmer-Schaltung mit Mikrocontroller-Ansteuerung für das Phasenanschnitt-Verfahren mit hoher Rundsteuersignalfestigkeit anzugeben.

Diese Aufgabe wird erfindungsgemäß gelöst durch eine Dimmer-Schaltung für das Phasenanschnitt-Verfahren mit einem Mikrocontroller zur Ansteuerung eines Leistungsteils, welches in Serie mit einer Last, vorzugsweise einem Leuchtmittel, an ein Wechselspannungsnetz angeschlossen ist,
- wobei eine Nulldurchgangserkennung den Mikrocontroller beim Nulldurchgang der sinusförmigen Netzwechselspannung synchronisiert,
- wobei der Phasenwinkel mittels einer R/C-Kombination mit mindestens einem Widerstand und mindestens einem hierzu in Serie liegenden Kondensator abgeleitet wird und
- wobei der Kondensator durch den Mikrocontroller gezielt zum Ende einer jeden Halbwelle der Netzspannung entladen wird.

Die mit der Erfindung erzielbaren Vorteile bestehen insbesondere darin, dass durch die vorgeschlagene Dimmer-Schaltung die Empfindlichkeit von Mikrocontrollergesteuerten Dimmern gegen Rundsteuersignale verbessert wird, da die Ansteuerung des Leistungsteils stets synchronisiert zur Netzwechselspannung erfolgt und die zur Bildung des Phasenwinkels notwendigen Komponenten (Kondensator) ebenfalls synchronisiert zur Netzwechselspannung betrieben werden.

Beim allgemein bekannten Stand der Technik reduziert ein Softwarefilter den störenden Einfluss von Rundsteuersignalen auf die Nulldurchgangserkennung und somit auf die eingestellte Helligkeit des Leuchtmittels. Dies gelingt jedoch nicht immer bei allen möglichen Rundsteuersignalfrequenzen zur vollen Zufriedenheit. An dieser Stelle ergeben sich Verbesserungen mit Hilfe der vorgeschlagenen Erfindung.

Dabei kann zur Vorgabe des Phasenwinkels, bei dem die Netzwechselspannung durchzuschalten ist, alternativ
- entweder ein Potentiometer zwischen den Widerstand und den Kondensator geschaltet sein, dessen Potentiometerschleifer an den Mikrocontroller angeschlossen ist,
- oder ein Komparator vorgesehen sein, dessen Eingänge zum Einen mit dem Abgriff der R/C-Kombination und zum Anderen mit einem vom Mikrocontroller gespeisten Filter verbunden sind.

Zweckmäßig ist das Filter aus einer R/C-Kombination gebildet ist, deren Abgriff an den Komparator angeschlossen ist.

Vorzugsweise ist die Nulldurchgangserkennung aus zwei in Serie geschalteten Widerständen gebildet, deren Abgriff mit dem Mikrocontroller verbunden ist.

Die Erfindung wird nachstehend der in der Zeichnung dargestellten Ausführungsbeispiele näher erläutert. Es zeigen:
- Fig. 1: eine erste Ausführungsform einer Dimmer-Schaltung für das Phasenanschnitt-Verfahren,
- Fig. 2: eine zweite Ausführungsform einer Dimmer-Schaltung für das Phasenanschnitt-Verfahren.

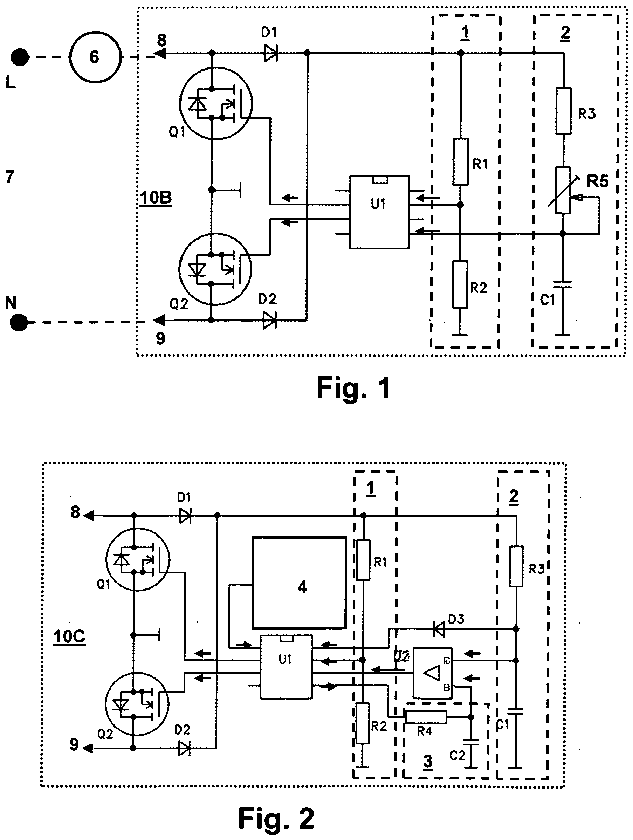

In Fig. 1 ist eine erste Ausführungsform einer Dimmer-Schaltung für das Phasenanschnitt-Verfahren dargestellt. Zwischen dem ersten Anschluss 8 und dem zweiten Anschluss 9 der Dimmer-Schaltung 10B ist ein Leistungsteil mit zwei Leistungshalbleitern Q1, Q2 in Serie angeordnet, wobei ihr gemeinsamer Verbindungspunkt den Masseanschluss der Schaltung darstellt. An den Verbindungspunkt von erstem Anschluss 8 / Leistungshalbleiter Q1 ist eine Diode D1 angeschlossen, welche andererseits mit einem Widerstand R1, einem Widerstand R3 und über eine Diode D2 mit dem Verbindungspunkt von zweitem Anschluss 9 / Leistungshalbleiter Q2 verbunden ist. Der Widerstand R1 ist mit einem Widerstand R2 verbunden, welcher andererseits an Masse liegt. Der gemeinsame Verbindungspunkt (= Abgriff der Nulldurchgangserkennung) beider Widerstände R1 / R2 ist an einen Eingang eines Mikrocontrollers U1 (Regeleinrichtung) angeschlossen.

Der Widerstand R3 ist über ein Potentiometer R5 und einen hierzu in Serie liegenden Kondensator C1 an Masse angeschlossen. Ein weiterer Eingang des Mikrocontrollers U1 ist an den Potentiometerschleifer sowie an den Verbindungspunkt von Potentiometer R5 / Kondensator C1 angeschlossen. Ausgangsseitig ist der Mikrocontroller U1 mit den Steueranschlüssen der Leistungshalbleiter Q1, Q2 verbunden.

Fig. 1 zeigt eine Prinzipschaltung eines Dimmers mit Mikrocontroller. Zur Steuerung des die Helligkeit des Leuchtmittels 6 bestimmenden Phasenwinkels ϕ, bei dem die Netzwechselspannung durchzuschalten ist, wird der Nulldurchgang der Netzspannung ermittelt - dargestellt durch die zur Synchronisation dienende Nulldurchgangserkennung 1 mit den beiden Widerständen R1, R2.

Wesentlich an der Ausführungsform gemäß Fig. 1 ist die Kombination von
- Nulldurchgangserkennung 1 zur Synchronisation und
- R/C-Kombination 2 zur Erzeugung des die Helligkeit des Leuchtmittels 6 bestimmenden Phasenwinkels ϕ, wobei die R/C-Kombination 2 durch den Widerstand R3, das Potentiometer R5 und den Kondensator C1 gebildet wird.

Der die Helligkeit des Leuchtmittels 6 bestimmende Phasenwinkel ϕ wird erhalten, indem der Mikrocontroller U1 den mittels R/C-Kombination 2 vorgegebenen Wert auswertet.

Der Mikrocontroller U1 errechnet mittels eines Software-Filters aus den mittels Nulldurchgangserkennung 1 detektierten Nulldurchgängen eine interne Synchronisation. Diese bewirkt zum richtigen Zeitpunkt
- das Ausschalten der Leistungshalbleiter Q1 und Q2 sowie
- das gezielte Entladen des Kondensators C1 zum Ende einer jeden Halbwelle der Netzwechselspannung (Netzspannungshalbwelle).

Mit der nächsten Netzspannungshalbwelle wird der Kondensator C1 über den Widerstand R3 und das Potentiometer R5 aufgeladen. Beim Erreichen einer festgelegten Spannungsschwelle schaltet der Mikrocontroller U1 die Leistungshalbleiter Q1, Q2 ein. Vorteil dieser Schaltungsauslegung ist die sehr gute Unempfindlichkeit gegen Rundsteuersignale in Verbindung mit Mikrocontroller -gesteuerten Phasenanschnitt-Dimmern.

Vorteilhaft ist auch ein langsames Einschalten "Softstart" des Leuchtmittels 6 möglich, wobei hierzu das Einschalten der Leistungshalbleiter Q1, Q2 und somit der Phasenwinkel ϕ während eines ersten Zeitabschnittes durch die internen Timer des Mikrocontrollers U1 gesteuert wird. Der Phasenwinkel ϕ wird durch den Mikrocontroller U1 so lange vergrößert, bis der durch die R/C-Kombination 2 mit R3, R5 und C1 durch Betätigung des Potentiometers R5 eingestellte Phasenwinkel ϕ erreicht ist. Der Mikrocontroller U1 schaltet dann um auf die durch die R/C-Kombination 2 vorgegebene Helligkeitssteuerung während eines zweiten Zeitabschnittes.

In der in Fig. 1 dargestellten Schaltung wird die Helligkeit des Leuchtmittels 6 durch händische Betätigung des Potentiometers R5 eingestellt. Gegebenenfalls ist jedoch eine derartige mechanische Einstellung der Helligkeit nicht erwünscht, z. B. ist für die Bedienung eines Dimmers über ein Bussystem oder über eine Fernbedienung eine elektronische Einstellung, d. h. Vorgabe der Helligkeit des Leuchtmittels 6 erforderlich.

Diese Variante ist in Fig. 2 dargestellt, d. h. eine zweite Ausführungsform einer Dimmer-Schaltung für das Phasenanschnitt-Verfahren. Zwischen dem ersten Anschluss 8 und dem zweiten Anschluss 9 einer Dimmer-Schaltung 10C sind zwei Leistungshalbleiter Q1, Q2 in Serie angeordnet, wobei ihr gemeinsamer Verbindungspunkt den Masseanschluss der Schaltung darstellt. An den Verbindungspunkt von erstem Anschluss 8 / Leistungshalbleiter Q1 ist eine Diode D1 angeschlossen, welche andererseits mit einem Widerstand R1, einem Widerstand R3 und über eine Diode D2 mit dem Verbindungspunkt von zweitem Anschluss 9 / Leistungshalbleiter Q2 verbunden ist. Der Widerstand R1 ist mit einem Widerstand R2 verbunden, welcher andererseits an Masse liegt. Der gemeinsame Verbindungspunkt beider Widerstände R1 / R2 (Abgriff) ist an einen Eingang eines Mikrocontrollers U1 angeschlossen.

Der Widerstand R3 ist über einen in Serie liegenden Kondensator C1 an Masse angeschlossen. Der Verbindungspunkt (= Abgriff der R/C-Kombination) von Widerstand R3 / Kondensator C1 ist an den nichtinvertierenden Eingang eines Komparators U2 und über eine Diode D3 an einen weiteren Eingang des Mikrocontrollers U1 angeschlossen.

Zusätzlich ist ein aus einem Widerstand R4 und einem Kondensator C2 bestehendes Filter 3 vorgesehen, wobei der Verbindungspunkt von Widerstand R4 / Kondensator C2 (= Abgriff des Filters 3) an den invertierenden Eingang des Komparators U2 angeschlossen ist, der Kondensator C2 andererseits an Masse liegt und der Widerstand R4 andererseits an einen Ausgang des Mikrocontrollers U1 angeschlossen ist. Ausgangseitig ist der Komparator U2 an einen weiteren Eingang des Mikrocontrollers U1 angeschlossen.

Ein weiterer Eingang des Mikrocontrollers U1 ist mit einem elektronischen Bedienteil 4 verbunden, beispielsweise einem IR-Empfänger für eine IR-Fernbedienung (Infrarot) oder einer Busankopplung für die Verbindung mit einem Bussystem oder einem Bewegungsmelder, welcher zur Ansteuerung der Dimmer-Schaltung 10C vorgesehen ist.

Ausgangsseitig ist der Mikrocontroller U1 mit den Steueranschlüssen der Leistungshalbleiter Q1, Q2 verbunden.

Die beiden Widerstände R1, R2 bilden wiederum die Nulldurchgangserkennung 1, wie unter Fig. 1 erläutert. Die R/C-Kombination 2 gemäß Fig. 1 weist kein Potentiometer R5, jedoch noch Widerstand R3 und Kondensator C1 auf.

Der Kondensator C1 wird über den Widerstand R3 aufgeladen. Somit liegt am Kondensator C1 eine den Phasenwinkel ϕ abbildende, mit der Zeit t ansteigende Ladespannung UC1 an. Zur Steuerung der Helligkeit wird der dem invertierenden Eingang des Komparators U2 zugeführte Schwellwert verändert, ab dem die Leistungshalbleiter Q1, Q2 angesteuert werden sollen. Dies wird durch das elektronische Bedienteil 4 vorgegeben und mit Hilfe des Komparators U2 umgesetzt. Der Mikrocontroller U1 erzeugt - z. B. mittels Pulsweitenmodulation - in Abhängigkeit des vom Bedienteil 4 vorgegebenen Wertes eine Steuerspannung, die über das Filter 3 mit Widerstand R4 und Kondensator C2 auf den invertierenden Eingang des Komparators U2 gegeben wird. Sobald die Ladespannung UC1 des Kondensators C1 größer geworden ist als die Steuerspannung am Kondensator C2, schaltet der Komparator U1 um und der Mikrocontroller U1 steuert die beiden Leistungshalbleiter Q1, Q2 an (in den Einschaltzustand). Der Komparator U2 kann selbstverständlich auch im Mikrocontroller U1 integriert sein.

Über die Diode D3 wird der Kondensator C1 zum Ende der Halbwelle der Netzwechselspannung gezielt durch den Mikrocontroller U1 entladen.

### Bezugszeichenliste

- 1: Nulldurchgangserkennung zur Synchronisation
- 2: R/C-Kombination
- 3: Filter
- 4: elektronisches Bedienteil
- 5: R/C-Kombination
- 6: Last, insbesondere dimmbares Leuchtmittel
- 7: Wechselspannungsnetz
- 8: erster Anschluss der Dimmer-Schaltung
- 9: zweiter Anschluss der Dimmer-Schaltung
- 10: 10A, 10B, 10C Dimmer-Schaltung

- C: Kondensator
- C1: Kondensator
- C2: Kondensator
- D: Triggerdiode
- D1: Diode
- D2: Diode
- D3: Diode
- L: Phasenleiter
- N: Nullleiter
- P: Potentiometer zur Vorgabe der Helligkeit des Leuchtmittels
- R: Widerstand
- R1: Widerstand
- R2: Widerstand
- R3: Widerstand
- R4: Widerstand
- R5: Potentiometer zur Vorgabe der Helligkeit des Leuchtmittels
- Q: Triac
- Q1: Leistungshalbleiter des Leistungsteils
- Q2: Leistungshalbleiter des Leistungsteils
- t: Zeit
- U1: Mikrocontroller
- U2: Komparator
- UC1: Ladespannung am Kondensator C1
- ϕ: Phasenwinkel

## Patentansprüche

1. Dimmer-Schaltung (10B, 10C) für das Phasenanschnitt-Verfahren mit einem Mikrocontroller (U1) zur Ansteuerung eines Leistungsteils (Q1, Q2), welches in Serie mit einer Last (6), vorzugsweise einem Leuchtmittel, an ein Wechselspannungsnetz (7) angeschlossen ist,
• wobei eine Nulldurchgangserkennung (1) den Mikrocontroller (U1) beim Nulldurchgang der sinusförmigen Netzwechselspannung synchronisiert,
• wobei der Phasenwinkel (ϕ) mittels einer R/C-Kombination mit mindestens einem Widerstand (R3) und mindestens einem hierzu in Serie liegenden Kondensator (C1) abgeleitet wird und
• wobei der Kondensator (C1) durch den Mikrocontroller (U1) gezielt zum Ende einer jeden Halbwelle der Netzspannung entladen wird.

2. Dimmer-Schaltung nach Anspruch 1, **dadurch gekennzeichnet, dass** zur Vorgabe des Phasenwinkels (ϕ), bei dem die Netzwechselspannung durchzuschalten ist, ein Potentiometer (R5) zwischen den Widerstand (R3) und den Kondensator (C1) geschaltet ist, dessen Potentiometerschleifer an den Mikrocontroller (U1) angeschlossen ist.

3. Dimmer-Schaltung nach Anspruch 1, **dadurch gekennzeichnet, dass** zur Vorgabe des Phasenwinkels (ϕ), bei dem die Netzwechselspannung durchzuschalten ist, ein Komparator (U2) vorgesehen ist, dessen Eingänge zum Einen mit dem Abgriff der R/C-Kombination (R3, C1) und zum Anderen mit einem vom Mikrocontroller (U1) gespeisten Filter (3) verbunden sind.

4. Dimmer-Schaltung nach Anspruch 3, **dadurch gekennzeichnet, dass** das Filter (3) aus einer R/C-Kombination (R4, C2) gebildet ist, deren Abgriff an den Komparator angeschlossen ist.

5. Dimmer-Schaltung nach einem der vorstehenden Ansprüche, **dadurch gekennzeichnet, dass** die Nulldurchgangserkennung (1) aus zwei in Serie geschalteten Widerständen (R1, R2) gebildet ist, deren Abgriff mit dem Mikrocontroller (U1) verbunden ist.

## Claims

1. Dimmer circuit (10B, 10C) for phase-gating, comprising a microcontroller (U1) for driving a power section (Q1, Q2) which is connected to an AC voltage supply system (7) in series with a load (6), preferably a lighting means,
• wherein a zero crossing identification circuit (1) synchronizes the microcontroller (U1) at the zero crossing of the sinusoidal supply system AC voltage,
• wherein the phase angle (ϕ) is derived by means of an R/C combination comprising at least one resistor (R3) and at least one capacitor (C1) which is connected in series with the said resistor, and
• wherein the capacitor (C1) is discharged by the microcontroller (U1) in a targeted manner at the end of each half-wave of the supply system voltage.

2. Dimmer circuit according to Claim 1, **characterized in that**, for the purpose of prespecifying the phase angle (ϕ) at which the supply system AC voltage is to be connected through, a potentiometer (R5) is connected between the resistor (R3) and the capacitor (C1), the wiper of the said potentiometer being connected to the microcontroller (U1).

3. Dimmer circuit according to Claim 1, **characterized in that**, for the purpose of prespecifying the phase angle (ϕ) at which the supply system AC voltage is to be connected through, a comparator (U2) is provided, the inputs of the said comparator being connected firstly to the tap of the R/C combination (R3, C1) and secondly to a filter (3) which is fed by the microcontroller (U1).

4. Dimmer circuit according to Claim 3, **characterized in that** the filter (3) is formed from an R/C combination (R4, C2), the tap of the said R/C combination being connected to the comparator.

5. Dimmer circuit according to one of the preceding claims, **characterized in that** the zero crossing identification circuit (1) is formed from two resistors (R1, R2) which are connected in series, the tap of the said zero crossing identification circuit being connected to the microcontroller (U1).

## Revendications

1. Circuit gradateur (10B, 10C) pour le procédé de découpage de phase, comprenant un microcontrôleur (U1) destiné à commander une partie de puissance (Q1, Q2) qui est branchée en série avec une charge (6), de préférence une source lumineuse, à un réseau de tension alternative (7),
* une détection de passage par zéro (1) synchronisant le microcontrôleur (U1) lors du passage par zéro de la tension alternative sinusoïdale du réseau,
* l'angle de phase (ϕ) étant dérivé au moyen d'une combinaison R/C comprenant au moins une résistance (R3) et au moins un condensateur (C1) qui se trouve en série avec celle-ci et
* le condensateur (C1) étant déchargé par le microcontrôleur (U1) de manière ciblée jusqu'à la fin de chaque demi-onde de la tension de réseau.

2. Circuit gradateur selon la revendication 1, **caractérisé en ce qu'**un potentiomètre (R5), dont le curseur de potentiomètre est raccordé au microcontrôleur (U1), est branché entre la résistance (R3) et le condensateur (C1) en vue de prédéfinir l'angle de phase (ϕ) auquel la tension alternative du réseau doit être commutée.

3. Circuit gradateur selon la revendication 1, **caractérisé en ce qu'**un comparateur (U2) est présent pour prédéfinir l'angle de phase (ϕ) auquel la tension alternative du réseau doit être commutée, dont les entrées sont reliées d'une part à la prise de la combinaison R/C (R3, C1) et d'autre part à un filtre (3) alimenté par le microcontrôleur (U1).

4. Circuit gradateur selon la revendication 3, **caractérisé en ce que** le filtre (3) est formé par une combinaison R/C (R4, C2) dont la prise est raccordée au comparateur.

5. Circuit gradateur selon l'une des revendications précédentes, **caractérisé en ce que** la détection de passage par zéro (1) est formée par deux résistances (R1, R2) branchées en série dont la prise est reliée au microcontrôleur (U1).
